# FASCICULE DE BREVET EUROPEEN

(11) **EP 1 961 530 B1**
(45) Date de publication et mention de la délivrance du brevet: **04.04.2012**
(21) Numéro de dépôt: 08358002.7
(22) Date de dépôt: 25.02.2008
(51) Int. Cl.: B27B 17/14

(54) **Scie à chaîne munie d'un dispositif de réglage de la tension de la chaîne de coupe**
Kettensäge mit Reguliervorrichtung für die Spannung der Schnittkette
Chainsaw equipped with a device for adjusting the tension of the cutting chain

(30) Priorité: 26.02.2007 FR 0701355
(43) Date de publication de la demande: 27.08.2008
(73) Titulaire: PELLENC (Société Anonyme), 84120 Pertuis (FR)
(72) Inventeur: Pellenc, Roger, 84120 Pertuis (FR)
(74) Mandataire: Marek, Pierre

(56) Documents cités:
- EP-A1- 1 637 299
- JP-A- 7 314 402
- US-A- 3 382 898
- US-A- 3 636 995

## Description

La présente invention concerne une scie à chaîne munie d'un dispositif de réglage de la tension de la chaîne selon le préambule de la revendication 1. Une telle scie à chaîne est connue du document JP 073 14 402 A.

De tels outils à chaîne de coupe couramment appelés tronçonneuses sont bien connus et sont communément utilisés pour débiter des matériaux divers (bois, béton, briques, carreaux, etc.). Ils comprennent un dispositif de coupe constitué par une chaîne de coupe sans fin montée tournante autour d'un pignon d'entraînement et d'un guide-chaîne de forme généralement oblongue et muni d'un rail périphérique de guidage, et une source de puissance réalisant l'entraînement de cette chaîne, par l'intermédiaire dudit pignon. Pour réaliser un travail satisfaisant et sécurisé, il est indispensable que la chaîne de coupe soit parfaitement tendue. En effet, lorsque cette chaîne est détendue, elle représente un risque majeur de déraillement et de rupture et constitue ainsi un risque de blessure de l'opérateur. D'autre part, lorsque la chaîne est trop tendue, il en résulte une usure plus rapide de la chaîne et du guide-chaîne, un échauffement anormal de celle-ci et du guide-chaîne, une surconsommation d'énergie et une perte d'efficacité du dispositif de coupe pouvant conduire à un grippage de ce dernier.

En raison du fait que la chaîne se détend d'elle-même du fait de l'usure des axes de chaîne, en cours d'utilisation, le réglage de sa tension ne peut être effectué une fois pour toutes, mais doit être au contraire répété régulièrement , au fur et à mesure que se détend ladite chaîne. Il s'agit d'une opération délicate et compliquée parce que l'opérateur éprouve de la difficulté pour apprécier et obtenir la tension idoine.

De nombreux dispositifs ont été proposés à ce jour, pour régler la tension de la chaîne de coupe qui nécessite un déplacement du guide-chaîne tendant à éloigner ce dernier du pignon d'entraînement. Aucun de ces dispositifs ne permet cependant un réglage automatique satisfaisant de cette tension. Généralement, le principe de réglage de celle-ci met en oeuvre un dispositif de tendeur à vis parallèle au guide-chaîne.

Ces dispositifs connus nécessitent une grande expérience pour obtenir un ajustement à la bonne tension et, malgré une telle expérience un bon réglage n'est pas toujours assuré.

L'invention a notamment pour but de permettre un réglage automatique de la tension de la chaîne de coupe des scies à chaîne et aussi de faciliter l'obtention de ce réglage automatique. Elle se propose aussi de faciliter l'opération de remplacement de la chaîne, lorsque cela s'avère souhaitable.

L'invention se rapporte à une scie à chaîne définie par les caractéristiques de la revendication 1.

En cas de relâchement de la tension de la chaîne précédemment montée sur le guide-chaîne de la scie, on comprend qu'il suffit simplement de desserrer, puis de resserrer le dispositif de serrage pour obtenir automatiquement une remise en tension idoine de la chaîne.

L'invention a notamment pour avantages :
- l'obtention d'un réglage automatique de la tension de la chaîne à la bonne tension, grâce au dispositif de poussée pré-dimensionné et préréglé ;
- une simplicité de mise en oeuvre et une rapidité de réglage ;
- l'absence de besoin d'outil spécifique ;
- facilement réalisable sans nécessité d'expérience ;
- une sécurité, pas de risque de blessure, la main ne touche pas la chaîne.

Selon une autre disposition caractéristique, la scie à chaîne comporte un dispositif de retenue escamotable permettant d'immobiliser automatiquement le guide-chaîne, à l'encontre de l'action antagoniste de l'organe élastique du moyen de poussée, dans une position où il se trouve rapproché du pignon d'entraînement, la libération de ce moyen de retenue entraînant automatiquement l'éloignement dudit guide-chaîne par rapport au dit pignon d'entraînement et la mise en tension de la chaîne, sous l'action du moyen de poussée.

Grâce à cette disposition, l'enlèvement de la chaîne usée et son remplacement par une chaîne neuve peuvent être effectués de manière aisée, rapide et sécurisée, sans risque de blessure. Il en va de même pour le changement du guide-chaîne ou pour le retournement de celui-ci.

Selon une autre disposition caractéristique, le dispositif de poussée et le dispositif de retenue du guide-chaîne forment un ensemble fonctionnel comprenant un coulisseau disposé au-dessous de l'extrémité proximale du guide-chaîne, l'extrémité proximale de ce coulisseau étant munie d'au moins un, et de préférence, de deux crochets de butée et d'entraînement contre lesquels s'appuie l'extrémité proximale du guide-chaîne, tandis que l'organe élastique de poussée est calé, par l'intermédiaire de son extrémité distale, contre une surface de l'extrémité distale du coulisseau, un loquet escamotable monté au-dessous dudit coulisseau assurant automatiquement l'immobilisation de ce dernier lorsqu'il arrive en fin de course de recul.

Selon un mode d'exécution avantageux, le loquet escamotable est solidaire d'un doigt de manoeuvre permettant l'enfoncement dudit loquet et la libération du dispositif de retenue.

Selon un mode d'exécution, le doigt de manoeuvre du loquet escamotable est orienté en direction d'un capot se fixant sur le corps de l'appareil et ce doigt de manoeuvre possède une longueur telle qu'il se trouve automatiquement enfoncé lors de la mise en place dudit capot sur le corps, de sorte à enfoncer et effacer ledit loquet escamotable et à permette le déplacement du coulisseau vers l'avant de l'appareil, sous l'action du moyen de poussée.

Selon un autre agencement préféré, le loquet escamotable est soumis à l'action d'un moyen de pression avantageusement constitué par un ressort hélicoïdal, tendant à le repousser dans la position de blocage du coulisseau.

Selon une autre disposition avantageuse, le coulisseau est maintenu sur le corps de la scie au moyen d'un patin de guidage monté à l'extrémité d'une tige de fixation fixée sur le corps et traversant une fente longitudinale ménagée dans ledit coulisseau, ce patin de guidage chevauchant les bords de ladite fente et étant conformé pour assurer un guidage sans jeu notable du guide-chaîne, lors des déplacements longitudinaux de ce dernier. Plus précisément, la portion de la fente du guide-chaîne appelée à glisser sur le patin, présente une largeur permettant un coulissement dudit guide-chaîne, sans jeu notable, sur les côtés parallèles dudit patin.

Selon une autre disposition caractéristique, le corps comporte une plage d'appui contre laquelle se trouve serré le guide-chaîne et cette plage d'appui est pourvue d'un évidement dans lequel peut se déplacer le coulisseau par l'intermédiaire de l'une de ses surfaces planes et la surface opposée dudit coulisseau se trouve en retrait par rapport à ladite plage d'appui et de serrage.

L'invention sera mieux comprise à la lecture de la description qui va suivre, donnée uniquement à titre d'exemple et faite en se référant aux dessins annexés, selon lesquels :
- la figure 1 est une vue en perspective, avec arrachement, d'une scie à chaîne conforme à l'invention ;
- la figure 2 est une vue éclatée, en perspective, de la scie à chaîne représentée à la figure 1 ;
- la figure 3 est une vue en coupe selon le plan III de la figure 1 ;
- la figure 4 est une vue en coupe selon le plan IV de la figure 1 ;
- la figure 5 est une vue en coupe analogue à la figure 4 et représente le réglage automatique de la tension de la chaîne de la scie à chaîne des figures 1 et 2 ;
- la figure 6 est une vue latérale avec arrachement, qui illustre une étape du démontage de la chaîne de la scie à chaîne des figures 1 et 2 ;
- la figure 7 est une vue en coupe analogue à la figure 4 et représente une autre étape du démontage de la chaîne de la scie à chaîne des figures 1 et 2.

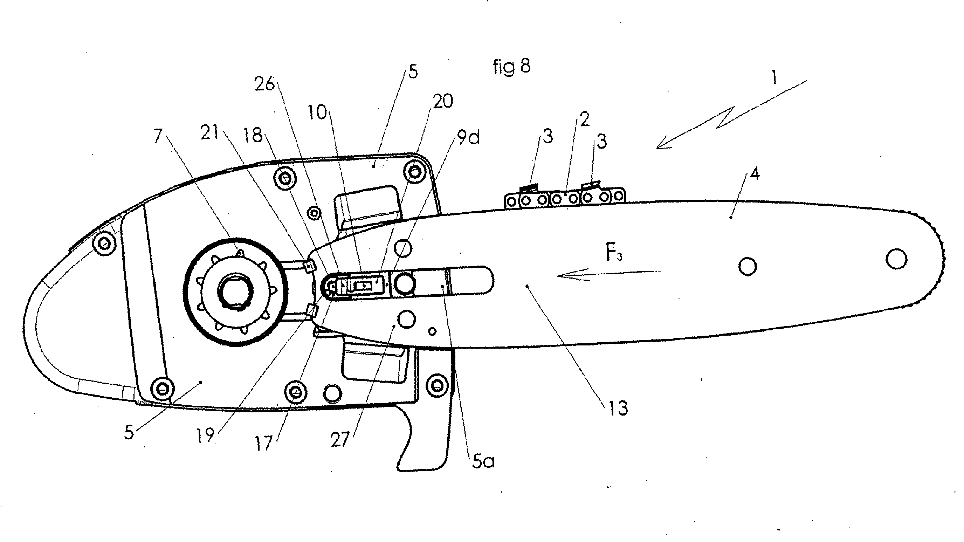

- la figure 8 est une vue en plan du corps de la scie à chaîne sur lequel le coulisseau et le loquet de retenue sont montrés dans une position correspondant à l'éloignement du guide-chaîne (représenté en traits fins) par rapport au pignon d'entraînement.
- la figure 9 est une vue en plan analogue à la figure 8 et montrant lesdits coulisseaux et loquet de retenue dans une position correspondant à une position rapprochée de guide-chaîne par rapport au pignon d'entraînement.
- la figure 10 est une vue de détail et en plan illustrant plus spécialement le guidage du guide-chaîne sur le patin de guidage et de maintien du coulisseau.
- La figure 11 est une vue en plan d'un guide-chaîne munie d'une fente conformée pour pouvoir glisser sans jeu notable sur deux côtés opposés dudit patin, en étant de la sorte guidé par ce dernier.

On se reporte aux dits dessins pour décrire un exemple de réalisation avantageux, bien que nullement limitatif, de la scie à chaîne selon l'invention.

On souligne que celle-ci s'applique à tout type de scie à chaîne (scie à chaîne à poignée, scie à chaîne à perche télescopique, etc.).

Dans ce qui suit et dans les revendications annexées, les termes "avant", "arrière", ainsi que les termes analogues se réfèrent à la position du guide 4 et de la chaîne 2 par rapport au reste de la scie à chaîne 1, en considérant que le guide 4 et la chaîne 2 dépassent sur l'avant de ladite scie à chaîne 1.

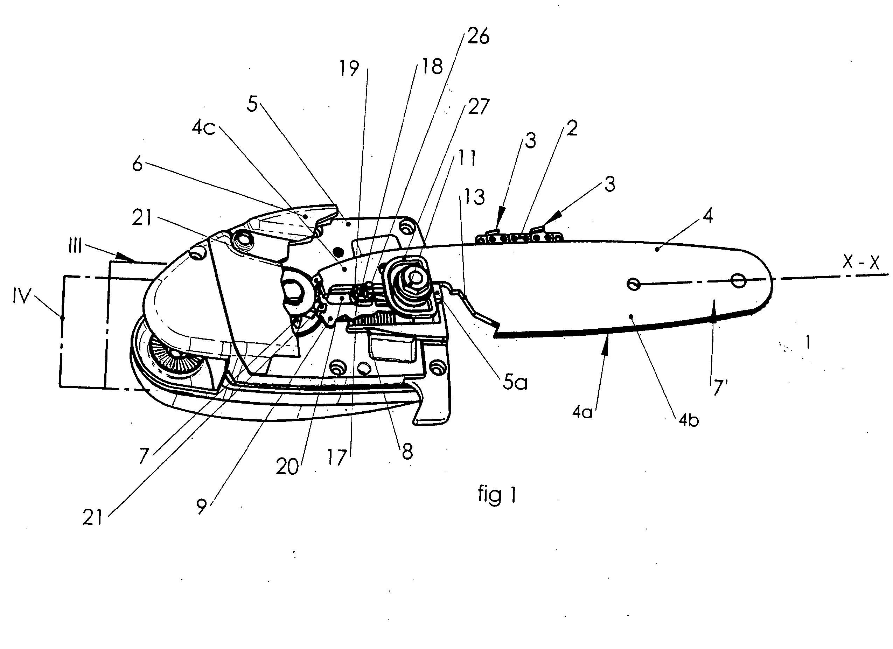

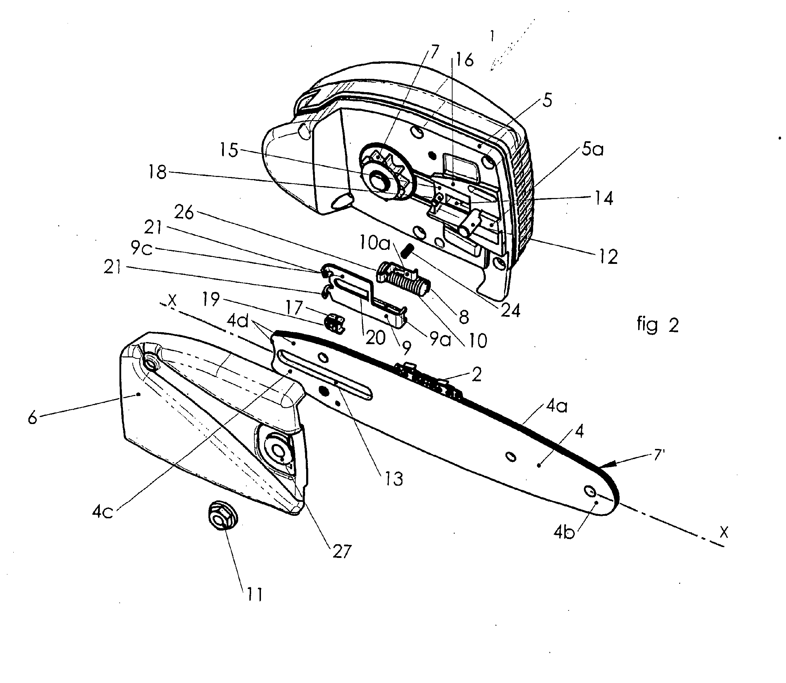

Sur les figures 1 et 2 est représentée une scie à chaîne 1 qui comporte, de manière classique, un dispositif de coupe comprenant une chaîne de coupe sans fin 2 montée tournante autour d'un pignon d'entraînement 7 et d'un guide-chaîne 4 de forme générale oblongue et muni d'un rail périphérique 4a de guidage de ladite chaîne et d'un pignon de renvoi 7' disposé à l'extrémité distale ou extrémité avant 4b de ce guide-chaîne. Une source de puissance, (non représentée) accouplée au pignon moteur 7, par exemple constituée par un moteur électrique ou par un moteur thermique, assure l'entraînement de la chaîne de coupe 2 par l'intermédiaire dudit pignon moteur 7. La chaîne de coupe articulée est constituée de manière connue en soi de maillons d'entraînement, de maillons gouges 3 (ou dents coupantes) et de maillons attaches reliés entre eux par des axes ou des rivets.

Dans sa partie proximale ou partie arrière 4c, le guide-chaîne 4 est pourvu d'une fente longitudinale 13 permettant son guidage en translation lors de ses déplacements par rapport au corps 5 qui présente, à l'avant, un élément de guidage constitué par une saillie 5a comportant deux côtés parallèles contre lesquels peuvent glisser les bords de ladite fente 13.

Le guide-chaîne 4 est monté, par l'intermédiaire de sa partie proximale 4c, entre deux éléments 5 et 6 dont l'une peut être constitué par un capot 6 se fixant sur l'autre que l'on appellera "corps" 5 dans la suite du présent exposé, par l'intermédiaire d'un dispositif de serrage permettant :
- soit d'immobiliser le guide-chaîne 4 sur le corps 5 ;
- soit d'autoriser les déplacements dudit guide-chaîne 4 vers l'arrière ou vers l'avant, c'est-à-dire dans deux directions tendant à le rapprocher ou à l'éloigner du pignon d'entraînement 7, de façon à relâcher la tension de la chaîne 2-3 ou à assurer la tension de celle-ci, respectivement.

Le dispositif de serrage permet de réaliser, à la fois, le serrage et le blocage du guide-chaîne 4 sur le corps 5, et la fixation du capot 6 sur ledit corps ; il est par exemple constitué d'une tige filetée 12 rendue solidaire du corps 5 et d'un écrou 11 se vissant sur la portion terminale filetée de ladite tige filetée. Avantageusement, notamment lorsque le capot 6 est exécuté en matière plastique rigide, ce dernier peut être équipé d'un mors métallique 27 logé avec une aptitude de mouvement axial et retenu dans une ouverture ménagée dans un évidement prévu dans ledit capot 6, de sorte à se trouver traversé par la tige filetée 12 du dispositif de serrage lors de la mise en place du capot 6 sur le corps 5. Ce mors 27 prenant appui sur une surface de la partie distale 4c du guide-chaîne 4 permet un serrage énergique de ce dernier contre le corps 5 en vissant l'écrou 11 sur la tige 12, tout en participant à la fixation du capot 6 sur ledit corps.

Selon une importante disposition caractéristique de l'invention, un dispositif de poussée tend à repousser automatiquement le guide-chaîne vers l'avant, c'est-à-dire dans une position l'éloignant du pignon d'entraînement 7 lorsque le dispositif de serrage est desserré, de sorte à réaliser une mise ou remise en tension automatique de la chaîne 2.

De manière avantageuse, ce dispositif de poussée comprend un coulisseau 9 dont l'extrémité proximale est munie d'un moyen de butée contre lequel prend appui l'extrémité proximale 4d du guide-chaîne 4 et un organe élastique, de préférence constitué par un ressort hélicoïdal 8 prenant appui, par l'intermédiaire de ses extrémités opposées, d'une part, contre un élément fixe du corps 5 et, d'autre part, contre une surface 9a de l'extrémité distale du coulisseau 9.

Ce ressort hélicoïdal 8 qui présente une longueur et une raideur ou force de rappel choisies pour obtenir une bonne tension de la chaîne 2, est calé, par l'intermédiaire de ses extrémités opposées, d'une part, contre l'extrémité proximale ou extrémité arrière 23a d'un logement 23 ménagé dans le corps 5 et dans lequel est logé ledit ressort, et, d'autre part, contre une surface distale 9a du coulisseau 9 prenant appui, par l'intermédiaire de sa partie proximale 21, contre l'extrémité distale 4d du guide-chaîne 4. Le logement 23 est ménagé dans le corps 5, au-dessous de l'emplacement où se trouve monté le coulisseau 9 et parallèlement à l'axe de déplacement de ce dernier.

Le ressort 8 peut être enfilé, par l'intermédiaire de sa partie distale, sur une tige 22 solidaire de l'extrémité distale 9a du coulisseau 9 et qui peut être formée d'une seule pièce avec ce dernier, cette tige s'étendant vers l'arrière.

Selon une autre disposition caractéristique de l'invention, la scie à chaîne comporte un dispositif de retenue avantageusement constitué par un loquet escamotable ou effaçable 10 permettant d'immobiliser automatiquement le guide-chaîne 4, à l'encontre de l'action antagoniste du moyen de poussée élastique 8, dans une position où il se trouve rapproché du pignon d'entraînement 7, ladite scie étant par ailleurs agencée de sorte que la libération de ce moyen de retenue entraîne automatiquement le déplacement vers l'avant du guide-chaîne 4 et la mise en tension de la chaîne, sous l'action du moyen de poussée.

Le loquet escamotable ou effaçable 10 constitue, en position active de blocage, un obstacle contre lequel bute un bord avant 9d du coulisseau 9.

De manière préférée, le moyen de poussée 8 et le dispositif de retenue 10 du guide-chaîne forment un ensemble fonctionnel comprenant le coulisseau 9 disposé au-dessous de la partie proximale 4c du guide-chaîne 4, l'extrémité proximale ou extrémité arrière de ce coulisseau étant munie d'au moins un, et de préférence, de deux crochets 21 de butée et d'entraînement contre lesquels s'appuie l'extrémité proximale ou extrémité arrière 4d du guide-chaîne 4, tandis que l'organe élastique de poussée 8 est calé, par l'intermédiaire de son extrémité distale, contre une surface 9a de l'extrémité distale ou extrémité avant du coulisseau 9, le loquet escamotable monté au-dessous dudit coulisseau 9 assurant automatiquement l'immobilisation de ce dernier lorsqu'il arrive en fin de course de recul.

Le crochet 21 ou chaque crochet 21 est constitué par une griffe recourbée vers l'avant, cela pour faciliter les opérations de montage et de démontage du guide-chaîne 4. En effet, grâce à cette conformation, les crochets 21 permettent un soulèvement et un basculement du guide chaîne 4 autour d'un point d'appui constitué par le fond desdits crochets, sur un angle de l'ordre de 45° à partir de la position de montage dudit guide-chaîne, ce qui facilite les manoeuvres de changement de chaîne et/ou de guide-chaîne.

Le loquet escamotable 10 est solidaire d'un doigt de manoeuvre 26 permettant l'enfoncement dudit loquet et la libération du dispositif de retenue. De préférence, le doigt de manoeuvre 26 est réalisé d'une seule pièce avec le loquet escamotable 10.

Le doigt de manoeuvre 26 du loquet escamotable 10 est orienté en direction du capot 6 se fixant sur le corps 5 de l'appareil et ce doigt de manoeuvre 26 possède une longueur telle qu'il se trouve automatiquement enfoncé lors de la mise en place dudit capot sur le corps, de sorte à escamoter ledit loquet et à permettre le déplacement du coulisseau 9 vers l'avant de l'appareil, sous l'action du ressort 8.

Le loquet escamotable 10 est soumis à l'action d'un moyen de pression avantageusement constitué par un ressort hélicoïdal 24 tendant à le repousser en position de blocage du coulisseau 9. Ce ressort de rappel 24 est, par exemple, enfilé sur une tige 25 solidaire du corps 5 et il est calé par l'intermédiaire de ses extrémités opposées, d'une part, contre une surface fixe dudit corps et, d'autre part, contre la face postérieure de la monture 10a dudit loquet escamotable 10.

Le loquet escamotable 10 a une position inclinée s'élevant vers l'arrière par rapport à la plage centrale plane 9b du coulisseau 9 et il se trouve enfoncé dans son logement 14 à l'encontre de l'action antagoniste du ressort 24, lors du recul du coulisseau 9. Lorsque le bord avant 9c du coulisseau 9 franchit le nez 10b du loquet 10, celui-ci se trouve repoussé par ledit ressort 24 et vient se placer devant ledit bord avant en interdisant ainsi tout mouvement tendant à éloigner le coulisseau 9 et le guide-chaîne 4 du pignon d'entraînement 7.

Selon le mode d'exécution illustré, lorsque le coulisseau 9 est éloigné du pignon 7, le loquet 10 se trouve logé dans une fente 20 dudit coulisseau ; lorsque celui-ci recule, le loquet se trouve enfoncé dans son logement 14 par l'appui exercé par la barrette transversale 9d délimitant l'extrémité avant de ladite fente 13. Lorsque la barrette 9d franchit le nez 10b du loquet 10, ce dernier se trouve repoussé par le ressort 24 et vient se placer devant ladite barrette 9d, en constituant ainsi une butée interdisant tout mouvement tendant à éloigner le coulisseau 9 et le guide-chaîne 4 du pignon d'entraînement 7 par exemple pendant les changements de chaîne ou de guide-chaîne.

Le corps 5 comporte une plage d'appui 16 contre laquelle se trouve serré le guide-chaîne 4 et cette plage d'appui est pourvue d'un évidement 15 dans lequel peut se déplacer le coulisseau 9 par l'intermédiaire de l'une de ses faces planes et la surface opposée 9e dudit coulisseau se trouve en retrait par rapport à ladite plage d'appui et de serrage 16. Le coulisseau 9 est guidé, lors de ses déplacements, par les bords longitudinaux parallèles de l'évidement ou logement 15.

Le coulisseau 9 est maintenu sous le corps 5 dans son logement 15, au moyen d'un patin 17 monté à l'extrémité d'une tige 18, par exemple au moyen d'un jonc élastique de retenue 19, ladite tige traversant la fente longitudinale 20 ménagée dans le coulisseau 9 et étant fixée sur le corps 5.

Le patin de maintien 17 chevauche les bords de la fente 20 et il est conformé et dimensionné pour assurer un guidage sans jeu notable du guide-chaîne 4, lors des mouvements longitudinaux de ce dernier. Il présente par exemple une forme carrée de sorte à présenter deux côtés parallèles opposés contre lesquels peuvent glisser, sans jeu notable, les bords parallèles opposés de la fente 13 du guide-chaîne. La portion 13a de la fente 13 du guide chaîne 4 appelée à glisser sur le patin de maintien et de guidage 17, présente une largeur L permettant un coulissement dudit guide-chaîne, sans jeu notable, sur les côtés parallèles dudit patin. Selon une disposition caractéristique, cette largeur L est égale ou supérieure à 9 mm.

La portion de maintien 17 sert également d'élément de guidage au coulisseau 9.

On décrit ci-après le fonctionnement du dispositif de réglage de la scie à chaîne selon l'invention.

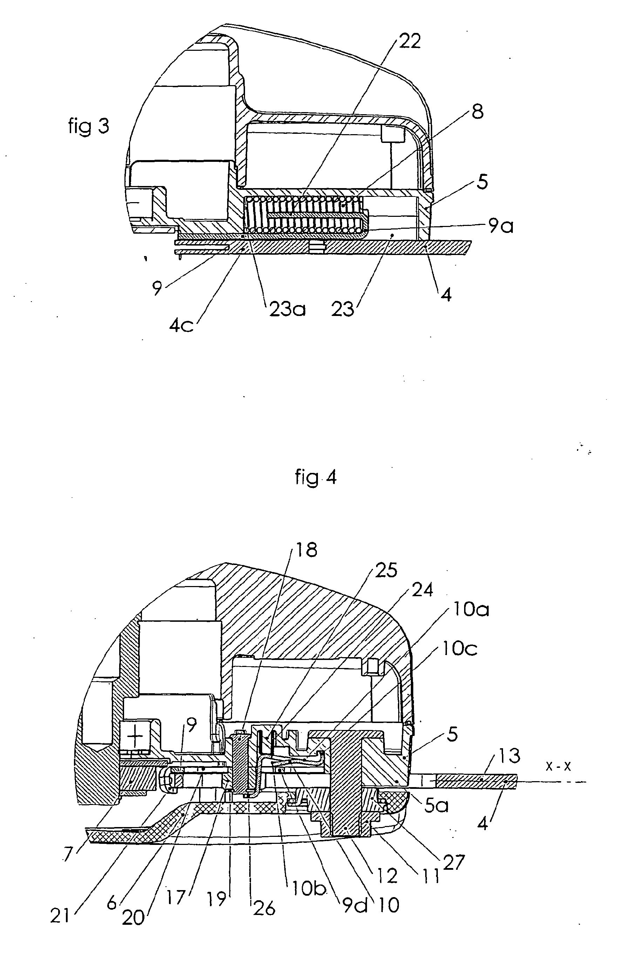

Prête à l'emploi, la scie à chaîne 1 est telle qu'illustrée à la figure 4, sur laquelle le guide-chaîne 4 est bloqué par serrage entre le corps 5 et le mors 27 enfilé sur la tige 18 et serré par l'écrou 11. Le mors 27 immobilise également le capot 6 en le serrant sur le guide-chaîne 4 et sur le corps 5.

Dans cette position, le loquet effaçable 10 se trouve enfoncé dans son logement 14 par le bord ou barrette avant 9d du coulisseau 9 se trouvant en appui contre ledit loquet.

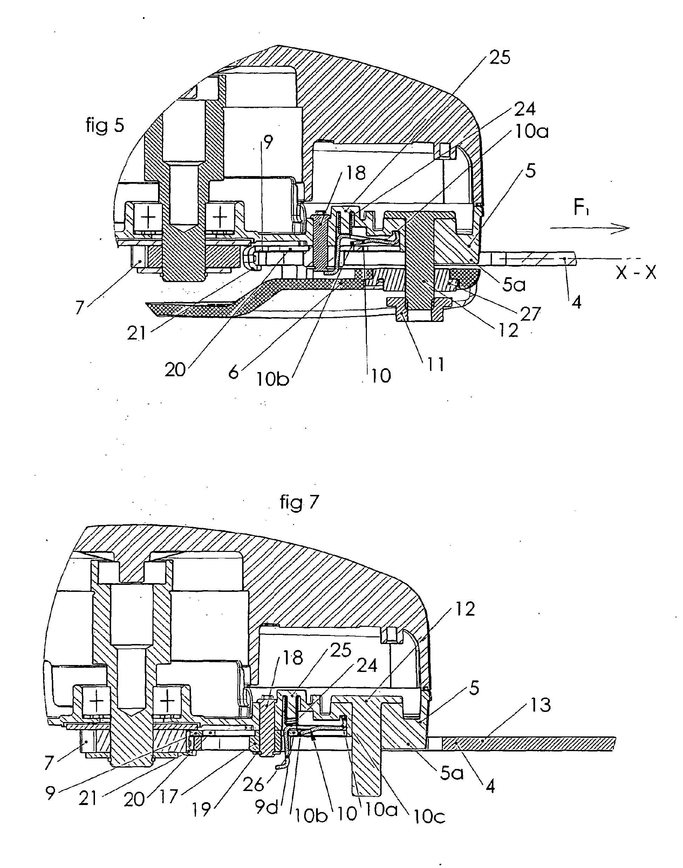

Lorsque la chaîne 2 est détendue, on effectue un nouveau réglage de sa tension simplement en desserrant puis en resserrant l'écrou 11, ce qui présente l'avantage d'être extrêmement simple, rapide et sûr à réaliser. Lorsque l'écrou 11 est desserré, le ressort 8 rappelle automatiquement le coulisseau 9 vers l'avant, ce qu'illustre le flèche F₁ à la figure 5. Ce faisant, ce ressort 8 retend la chaîne 2 en sollicitant le guide-chaîne 4 par l'intermédiaire du coulisseau 9, dans la direction opposée au pignon d'entraînement 7. La raideur ou force de rappel du ressort 8 est choisie de telle manière que ce ressort 8 tende la chaîne 2 de façon sensiblement optimale pour le type de travaux auxquels est destinée la scie à chaîne. En d'autres termes, le ressort 8 effectue automatiquement un réglage efficace et précis de la tension de la chaîne, une fois l'écrou 11 desserré. Le serrage subséquent de l'écrou 11 fixe ce réglage en immobilisant de nouveau le guide 4 par rapport au pignon 7.

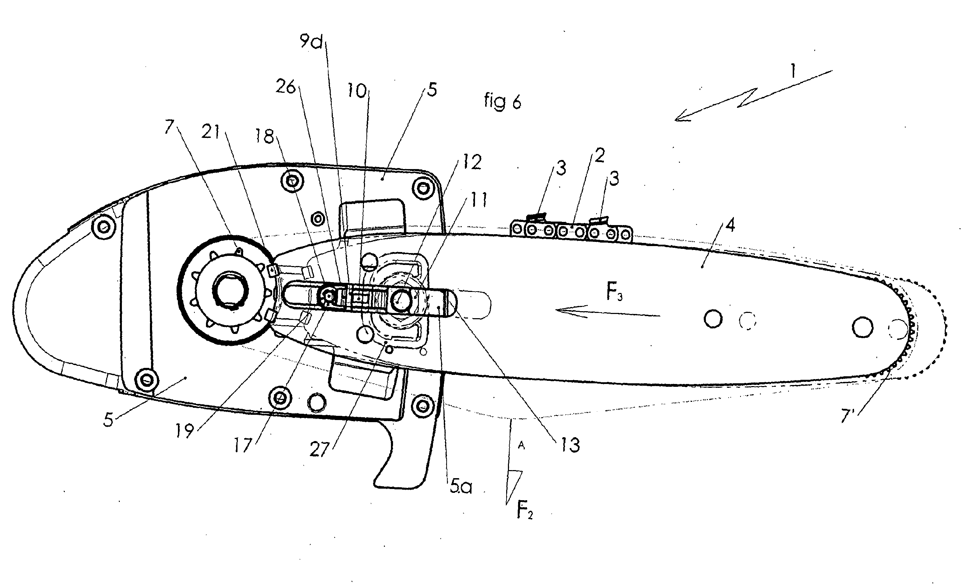

Pour démonter la chaîne 2, on commence par desserrer l'écrou 11. Ensuite, on pousse le guide-chaîne 4 vers l'arrière, c'est-à-dire vers le pignon d'entraînement 7, à l'encontre de l'action antagoniste du ressort 8, jusqu'à ce que le bord avant 9d du coulisseau 9 ait franchi le nez 10b du loquet basculant 10. Pour ce faire, on peut simplement tirer latéralement sur la chaîne 2, comme l'illustre la flèche F₂ à la figure 6, où la position initiale du guide-chaîne 4 et du coulisseau 9 est représentée en traits mixtes. La tension F₂ exercée sur la chaîne 2 fait se déplacer le guide-chaîne 4 vers l'arrière, ce qu'illustre la flèche F₃ sur cette même figure 6, sans qu'il soit nécessaire d'effectuer un effort important ou dangereux. Lorsque le bord avant 9d du coulisseau 9 franchit le nez 10b du loquet basculant 10, le ressort 24 fait basculer ledit loquet en position de blocage illustrée à la figure 7, sur laquelle ledit loquet 10 retient le coulisseau 9 par son nez ou bord avant 10b, à l'encontre de l'action du ressort 8, en empêchant tout mouvement vers l'avant dudit coulisseau.

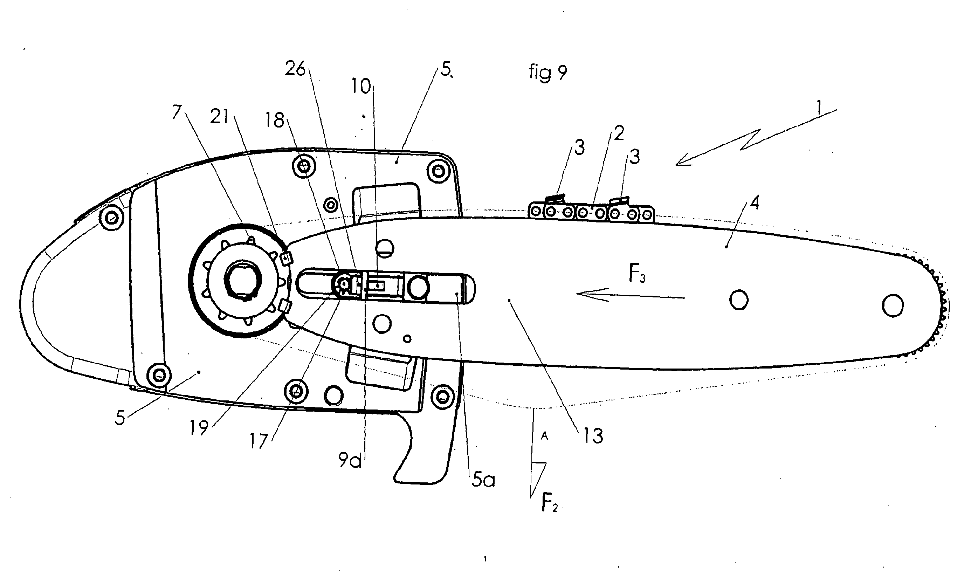

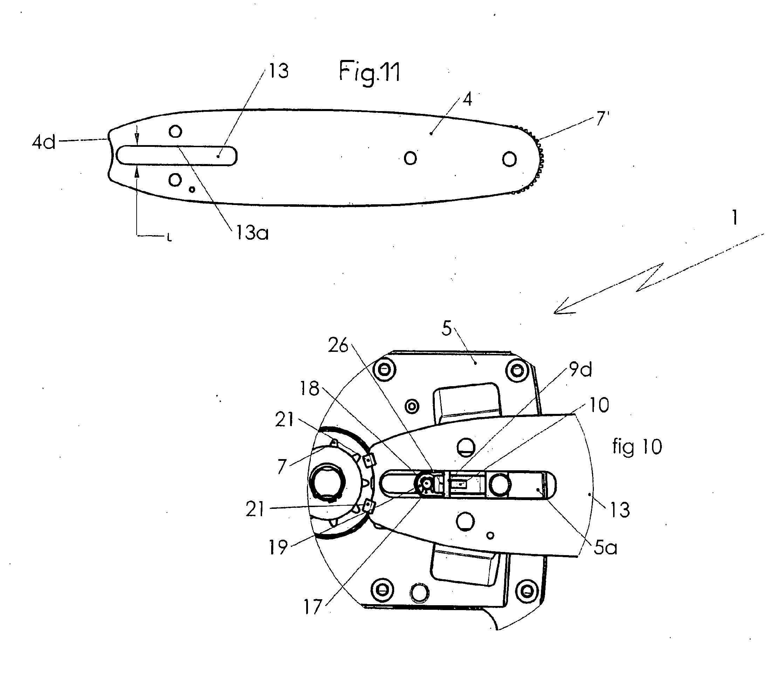

Dans cette position illustrée aux figures 6, 7, 9 et 10, le guide-chaîne 4 est reculé vers l'arrière, c'est-à-dire placé dans une position proximale rapprochée du pignon d'entraînement 7, de sorte que la chaîne 2 est lâche et peut être démontée, par exemple pour être remplacée, après avoir retiré le capot 6. Le retrait de cette chaîne 2 est alors aisé et sûr dans la mesure où l'action de rappel du ressort 8 est annulée par le loquet 10.

Lorsque la chaîne 2 a été démontée, on peut, si nécessaire, retirer aisément le guide-chaîne 4 que le loquet 10 et le coulisseau 9 isolent toujours de l'action de rappel du ressort 8. Ce guide-chaîne 4 ou autre guide-chaîne 4 de remplacement peut ensuite être facilement remonté, tandis que le loquet 10 retient toujours le coulisseau 9 en position reculée.

L'enlèvement ou la mise en place du guide-chaîne se trouvent facilités par la prévision des crochets 21 largement ouverts vers l'avant qui équipent l'extrémité distale du coulisseau, comme indiqué précédemment.

Alors que le coulisseau 9 est encore retenu dans sa position reculée, une nouvelle chaîne 2 peut être aisément installée sur le pignon d'entraînement 7 et sur le guide-chaîne 4. Une fois que cela a été effectué, on remet en place le capot 6, le mors 27 et l'écrou 11. Lors du vissage de cet écrou 11, le capot 6 est poussé vers le corps 5 et, par l'intermédiaire du doigt de manoeuvre 26 repousse le loquet 10 vers sa position d'effacement de la figure 4, à l'encontre de l'action du ressort 24. L'escamotage du loquet 10 libère le coulisseau 9, qui est alors repoussé vers l'avant par le ressort 8 et qui entraîne à son tour le guide-chaîne 4 vers une position de mise en tension de la chaîne 2. Après que l'action du ressort 8 a ainsi réalisée automatiquement la tension de la chaîne 2, la poursuite du vissage de l'écrou 11 conduit au serrage du mors 27 sur le guide-chaîne 4 lequel se trouve ainsi énergiquement immobilisé entre ledit mors 27 et le corps 5 de l'appareil, la chaîne de coupe se trouvant en situation de tension idoine. La scie à chaîne est de nouveau prête à l'emploi.

## Revendications

1. Scie à chaîne comprenant un dispositif de coupe constitué par une chaîne de coupe (2) montée tournante autour d'un pignon d'entraînement (7) et d'un guide-chaîne (4) qui peut être immobilisé sur un corps (5) au moyen d'un dispositif de serrage (11, 12) et qui peut être déplacé dans deux directions tendant à le rapprocher ou à l'éloigner du pignon d'entraînement (7) de façon à relâcher la tension de la chaîne (2) ou assurer la tension de celle-ci, respectivement, cette scie à chaîne comportant un dispositif de poussée (8,9) tendant à éloigner automatiquement le guide-chaîne (4), du pignon d'entraînement (7), lorsque le dispositif de serrage (11, 12) est desserré, ledit dispositif de poussée (8,9) étant constitué, d'une part, par un coulisseau (9) et, d'autre part, un organe élastique, de préférence constitué par un ressort hélicoïdal (8) **caractérisée en ce que** ledit dispositif de poussée est constitué, d'une part, par un coulisseau (9) contre l'extrémité arrière (21) duquel prend appui l'extrémité arrière (4d) du guide-chaîne (4) et d'autre part, d'un organe élastique, de préférence constitué par un ressort hélicoïdal prenant appui, par l'intermédiaire de ses extrémités opposées, d'une part, contre un élément fixe du corps (5) et, d'autre part, contre une surface (9a) de l'extrémité avant du coulisseau (9).

2. Scie à chaîne selon la revendication 1, **caractérisée en ce qu'**elle comporte un moyen de retenue escamotable (10) permettant d'immobiliser automatiquement le guide-chaîne (4), à l'encontre de l'action antagoniste de l'organe élastique (8) du moyen de poussée (8, 9) dans une position où il se trouve rapproché du pignon d'entraînement (7).

3. Scie à chaîne selon la revendication 2, **caractérisée en ce que** le moyen de retenue escamotable (10) constitue, en position active de blocage, un obstacle contre lequel bute un bord avant (9d) du coulisseau (9).

4. Scie à chaîne selon l'une des revendications 2 ou 3, **caractérisée en ce qu'**elle est agencée de sorte que la libération du moyen de retenue (10) entraîne automatiquement l'éloignement du guide-chaîne (4) par rapport au pignon d'entraînement (7) et la mise en tension de la chaîne de coupe (2-3), sous l'action du moyen de poussée (8).

5. Scie à chaîne selon l'une quelconque des revendications 2 à 4, **caractérisée en ce que** le dispositif de poussée (8,9) et le dispositif de retenue (9,10) du guide-chaîne forment un ensemble fonctionnel comprenant un coulisseau (9) disposé au-dessous de la partie arrière du guide-chaîne (4), l'extrémité arrière, de ce coulisseau (4) étant munie d'au moins un, et de préférence, de deux crochets de butée et d'entraînement (21) contre lesquels s'appuie l'extrémité arrière (4d) du guide-chaîne (4), tandis que l'organe élastique de poussée (8) est calé, par l'intermédiaire de son extrémité avant, contre une surface (9a) de l'extrémité avant du coulisseau (9), un loquet escamotable (10) monté au-dessous dudit coulisseau (9) assurant automatiquement l'immobilisation de ce dernier lorsqu'il arrive en fin de course de recul.

6. Scie à chaîne suivant la revendication 5, **caractérisé en ce que** le loquet escamotable est solidaire d'un doigt de manoeuvre (26) permettant l'enfoncement dudit loquet et la libération du dispositif de retenue, entraînant automatiquement l'éloignement du guide-chaîne (4) par rapport au pignon d'entraînement (7), et la mise en tension de la chaîne (2-3) sous l'action du moyen de poussée élastique (8).

7. Scie à chaîne selon la revendication 6, **caractérisée en ce que** le doigt de manoeuvre (26) du loquet escamotable (10) est orienté en direction d'un capot (6) se fixant sur le corps (5) de l'appareil et ce doigt de manoeuvre (26) possède une longueur telle qu'il se trouve automatiquement enfoncé lors de la mise en place dudit capot (6) sur le corps (5), de sorte à repousser et à escamoter ledit loquet (10) et à permettre le déplacement du coulisseau (9) et l'éloignement du guide-chaîne (4) par rapport au pignon d'entraînement (7), sous l'action du moyen élastique de poussée (8).

8. Scie à chaîne selon l'une quelconque des revendications 5 à 7, **caractérisée en ce que** le loquet escamotable (10) est soumis à l'action d'un moyen de pression (24), par exemple constitué par un ressort hélicoïdal, tendant à le repousser dans la position de blocage du coulisseau.

9. Scie à chaîne selon l'une quelconque des revendications 1 à 8, **caractérisée en ce que** le ressort hélicoïdal (8) du moyen de poussée (8, 9) est installé dans un logement (23) ménagé dans le corps (5) au-dessous du coulisseau (9).

10. Scie à chaîne selon la revendication 8, **caractérisée en ce que** le moyen de pression élastique (24) tendant à repousser le loquet (10) en position de blocage du coulisseau (9) est disposé autour d'une tige de guidage (25) solidaire du corps (5).

11. Scie à chaîne selon l'une quelconque des revendications 1 à 10, **caractérisée en ce que** le coulisseau (9) est maintenu sur le corps (5) de la scie au moyen d'un patin de guidage (17) monté à l'extrémité d'une tige de fixation (18) fixée sur le corps (5) et traversant une fente longitudinale (20) ménagée dans ledit coulisseau, ce patin de guidage (17) chevauchant les bords de ladite fente et étant conformé pour assurer un guidage sans jeu notable du guide-chaîne (4), lors des déplacements de ce dernier.

12. Scie à chaîne suivant la revendication 11 dont le guide-chaîne (4) est pourvu, dans sa partie arrière (4c), d'une fente longitudinale (13), **caractérisée en ce que** la portion (13a) de la fente (13) du guide-chaîne (4) appelée à glisser sur le patin (17) présente une largeur (L) permettant un coulissement sans jeu notable dudit guide-chaîne (4) sur les côtés parallèles dudit patin (17).

13. Scie à chaîne selon la revendication 12, **caractérisée en ce que** ladite portion de fente (13a) présente une largeur (L) égale ou supérieure à 9 mm

14. Scie à chaîne selon la revendication 11, **caractérisée en ce que** le patin de guidage (17) constitue également un organe de guidage du coulisseau lors des déplacements de celui-ci

15. Scie à chaîne suivant l'une quelconque des revendications 1 à 14 **caractérisée en ce que** le corps (5) comporte une plage d'appui (16) contre laquelle se trouve serré le guide-chaîne (4) et cette plage d'appui (16) est pourvue d'un évidement (15) dans lequel peut se déplacer le coulisseau par l'intermédiaire de l'une de ses surfaces planes et la surface opposée (9e) dudit coulisseau (9) se trouve en retrait par rapport à ladite plage d'appui et de serrage (16).

16. Scie à chaîne selon l'une quelconque des revendications 5 à 15, **caractérisée en ce que** le loquet escamotable (10) a une position inclinée s'élevant en direction de l'arrière, par rapport à la plage centrale plane (9c) du coulisseau (9) et il se trouve enfoncé dans son logement (14) à l'encontre de l'action antagoniste du ressort (24), lors du recul du coulisseau (9) et repoussé en position de butée lorsque le bord avant (9d) dudit coulisseau franchit le nez de blocage (10b) dudit loquet (10).

17. Scie à chaîne selon l'une quelconque des revendications 5 à 16, **caractérisée en ce que** le crochet ou chaque crochet de butée et d'entraînement (21) est constitué par une griffe recourbée vers l'avant.

## Claims

1. Chainsaw comprising a cutting device constituted by a cutting chain (2) mounted to turn about a drive pinion (7) and a chain-guide (4) that may be immobilised on a body (5) by means of a clamping device (11, 12) and that may be moved in two directions tending to move it toward or away from the drive pinion (7) so as to release the tension in the chain (2) or to tension the latter, respectively, this chainsaw including a thrust device (8, 9) tending to move the chain-guide (4) automatically away from the drive pinion (7) when the clamping device (11, 12) is loosened, said thrust device (8, 9) being constituted, on the one hand, by a slider (9) and, on the other hand, an elastic member, preferably constituted by a coil spring (8), **characterised in that** said thrust device is constituted, on the one hand, by a slider (9) against the rear end (21) of which bears the rear end (4d) of the chain-guide (4) and, on the other hand, an elastic member, preferably constituted by a coil spring (8) bearing at its opposite ends, on the one hand, against a fixed element of the body (5) and, on the other hand, against a surface (9a) of the front end of the slider (9).

2. Chainsaw according to claim 1, **characterised in that** it includes retractable retaining means (10) for automatically immobilising the chain-guide (4) against the antagonistic action of the elastic member (8) of the thrust means (8, 9) in a position in which it is close to the drive pinion (7).

3. Chainsaw according to claim 2, **characterised in that** the retractable retaining means (10), in an active immobilizing position, constitute an obstacle against which abuts a front edge (9d) of the slider (9).

4. Chainsaw according to either of claims 2 or 3, **characterised in that** it is adapted so that releasing the retaining means (10) automatically leads to movement of the chain-guide (4) away from the drive pinion (7) and the tensioning of the cutting chain (2-3) by the thrust means (8).

5. Chainsaw according to any one of claims 2 to 4, **characterised in that** the thrust device (8, 9) and the retaining device (9, 10) of the chain-guide form a functional assembly comprising a slider (9) disposed below the rear part of the chain-guide (4), the rear end of the slider (4) being provided with at least one, and preferably two, abutment and driving hooks (21) against which bears the rear end (4d) of the chain-guide (4), whereas the thrust elastic member (8) is immobilized, by means of its front end, against a surface (9a) of the front end of the slider (9), a retractable catch (10) mounted below said slider (9) automatically immobilising the latter when it reaches the end of its withdrawal travel.

6. Chainsaw according to claim 5, **characterised in that** the retractable catch is fastened to a manoeuvring finger (26) for depressing said catch and releasing the retaining device, automatically leading to the chain-guide (4) moving away from the drive pinion (7) and to tensioning of the chain (2-3) by the elastic thrust means (8).

7. Chainsaw according to claim 6, **characterised in that** the manoeuvring finger (26) of the retractable catch (10) is oriented in the direction of a cap (6) fixed to the body (5) of the device and this manoeuvring finger (26) has a length such that it is automatically depressed on fitting said cap (6) to the body (5), so as to push back and retract said catch (10) and to enable movement of the slider (9) and movement of the chain-guide (4) away from the drive pinion (7) by the thrust elastic
means (8).

8. Chainsaw according to any one of claims 5 to 7, **characterised in that** the retractable catch (10) is acted on by presser means (24), constituted by a coil spring, for example, tending to push it back into the position immobilizing the slider.

9. Chainsaw according to any one of claims 1 to 8, **characterised in that** the coil spring (8) of the thrust means (8, 9) is installed in a housing (23) provided in the body (5) below the slider (9).

10. Chainsaw according to claim 8, **characterised in that** the elastic presser means (24) tending to push the catch (10) back into the position immobilizing the slider (9) is disposed around a guide rod (25) fastened to the body (5).

11. Chainsaw according to any one of claims 1 to 10, **characterised in that** the slider (9) is held onto the body (5) of the saw by means of a guide skid (17) mounted at the end of a fixing rod (18) fixed to the body (5) and passing through a longitudinal slot (20) provided in said slider, this guide skid (17) straddling the edges of said slot and being conformed to guide the chain-guide (4) without significant clearance during movements thereof.

12. Chainsaw according to claim 11, the chain-guide (4) of which is provided, in its rear part (4c), with a longitudinal slot (13), **characterised in that** the portion (13a) of the slot (13) of the chain-guide (4) called upon to slide on the guide skid (17) has a width (L) enabling sliding of said chain-guide (4) without significant clearance on the parallel sides of said guide skid (17).

13. Chainsaw according to claim 12, **characterised in that** said slot portion (13a) has a width (L) equal to or greater than 9 mm.

14. Chainsaw according to claim 11, **characterised in that** the guide skid (17) also constitutes a guide member for the slider during movements thereof.

15. Chainsaw according to any one of claims 1 to 14, **characterised in that** the body (5) includes a bearing area (16) against which the chain-guide (4) is clamped and this bearing area (16) is provided with a recess (15) in which the slider may be moved via one of its plane surfaces and the opposite surface (9e) of said slider (9) is set back relative to said bearing and clamping area (16).

16. Chainsaw according to any one of claims 5 to 15, **characterised in that** the retractable catch (10) has an inclined position rising in the rearward direction relative to the plane central area (9c) of the slider (9) and is depressed into its housing (14) against the antagonistic action of the spring (24) on withdrawing the slider (9) and pushed back into an abutment position when the front edge (9d) of said slider passes the immobilizing tip (10b) of said catch (10).

17. Chainsaw according to any one of claims 5 to 16, **characterised in that** the abutment and driving hook or each abutment and driving hook (21) is constituted by a claw curved toward the front.

## Patentansprüche

1. Kettensäge, enthaltend eine Schneideinrichtung, die aus einer Schneidkette (2) gebildet ist, die um ein Antriebsritzel (7) und eine Kettenführung (4) umlaufend montiert ist, die auf einem Körper (5) mittels einer Klemmeinrichtung (11, 12) festgelegt werden kann und die in zwei Richtungen verschoben werden kann mit dem Bestreben, sie dergestalt an das Antriebsritzel (7) anzunähern oder von diesem zu entfernen, dass jeweils die Spannung der Kette (2) entweder gelockert oder deren Spannung sichergestellt wird, wobei diese Kettensäge eine Schiebeeinrichtung (8, 9) enthält mit dem Bestreben, die Kettenführung (4) automatisch vom Antriebsritzel (7) zu entfernen, wenn die Klemmeinrichtung (11, 12) gelöst wird, wobei die Schiebeeinrichtung (8, 9) einerseits aus einem Schieber (9) gebildet ist und andererseits aus einem elastischen Organ, das vorzugsweise von einer Schraubenfeder (8) gebildet ist, **dadurch gekennzeichnet, dass** die Schiebeeinrichtung einerseits aus einem Schieber (9) gebildet ist, an dessen rückwärtigem Ende (21) das rückwärtige Ende (4d) der Kettenführung (4) zur Anlage kommt, und andererseits aus einem elastischen Organ, das vorzugsweise aus einer Schraubenfeder gebildet ist, die mittels ihrer entgegengesetzten Enden einerseits an einem festen Element des Körpers (5) und andererseits an einer Fläche (9a) des vorderen Endes des Schiebers (9) zur Anlage kommt.

2. Kettensäge nach Anspruch 1, **dadurch gekennzeichnet, dass** sie ein versenkbares Haltemittel (10) enthält, das eine automatische Blockierung der Kettenführung (4) gegen eine entgegengerichtete Wirkung des elastischen Organs (8) der Schiebeeinrichtung (8, 9) in einer Position, in der sie an das Antriebsritzel (7) angenähert ist, erlaubt.

3. Kettensäge nach Anspruch 2, **dadurch gekennzeichnet, dass** das versenkbare Haltemittel (10) in der aktiven Blockierposition ein Hindernis bildet, gegen das die vordere Kante (9d) des Schiebers (9) stößt.

4. Kettensäge nach einem der Ansprüche 2 oder 3, **dadurch gekennzeichnet, dass** sie so angeordnet ist, dass die Freigabe des Haltemittels (10) automatisch zu einer Beabstandung der Kettenführung (4) relativ zum Antriebsritzel (7) und zum Spannen der Schneidkette (2 - 3) unter Einwirkung des Schiebemittels (8) führt.

5. Kettensäge nach einem der Ansprüche 2 bis 4, **dadurch gekennzeichnet, dass** die Schiebeeinrichtung (8, 9) und die Halteeinrichtung (9, 10) der Kettenführung eine Funktionseinheit bilden, die einen Schieber (9) enthält, der unter dem rückwärtigen Teil der Kettenführung (4) angeordnet ist, wobei das rückwärtige Ende dieses Schiebers (4) mit mindestens einem und vorzugsweise zwei Anschlag- und Antriebshaken (21) ausgestattet ist, an denen das rückwärtige Ende (4d) der Kettenführung anliegt, während das elastische Druckorgan (8) mittels seines vorderen Endes gegen eine Fläche (9a) des vorderen Endes des Schiebers (9) geklemmt ist, wobei eine unter dem Schieber (9) angebrachte versenkbare Sperrklinke (10) automatisch die Blockierung des Letzteren sicherstellt, wenn das Ende der Rückwärtsbewegung erreicht ist.

6. Kettensäge nach Anspruch 5, **dadurch gekennzeichnet, dass** die versenkbare Sperrklinke einstückig mit einem Betätigungsfinger (26) verbunden ist, der das Herunterdrücken der Sperrklinke und die Freigabe der Halteeinrichtung gestattet, was automatisch zur Beabstandung der Kettenführung (4) relativ zum Antriebsritzel (7) und zum Spannen der Kette (2 - 3) unter der Einwirkung der elastischen Druckeinrichtung (8) führt.

7. Kettensäge nach Anspruch 6, **dadurch gekennzeichnet, dass** der Betätigungsfinger (26) der versenkbaren Sperrklinke (10) in Richtung auf eine Haube (6) ausgerichtet ist, die am Körper (5) des Geräts befestigt ist, und dass dieser Betätigungsfinger (26) eine derartige Länge aufweist, dass er während des Einsetzens der Haube (6) auf dem Körper (5) automatisch nach unten gedrückt wird, so dass die Sperrklinke (10) zurückgedrückt und eingezogen wird und das Verschieben des Schiebers (9) und die Beabstandung der Kettenführung (4) in Bezug auf das Antriebsritzel (7) unter der Einwirkung der elastischen Druckeinrichtung (8) ermöglicht wird.

8. Kettensäge nach einem der Ansprüche 5 bis 7, **dadurch gekennzeichnet, dass** die versenkbare Sperrklinke (10) der Einwirkung einer Druckeinrichtung (24) unterworfen ist, die beispielsweise aus einer Schraubenfeder gebildet ist, mit dem Bestreben, sie in die Blockierposition des Schiebers zurückzudrücken.

9. Kettensäge nach einem der Ansprüche 5 bis 7, **dadurch gekennzeichnet, dass** die Schraubenfeder (8) der Druckeinrichtung (8, 9) in einem Sitz installiert ist, der im Körper (5) unterhalb des Schiebers (9) ausgespart ist.

10. Kettensäge nach Anspruch 8, **dadurch gekennzeichnet, dass** die elastische Druckeinrichtung (24) mit dem Bestreben, die Sperrklinke (10) in die Blockierposition des Schiebers (9) zurückzudrücken, um eine fest mit dem Körper (5) verbundene Führungsstange (25) angeordnet ist.

11. Kettensäge nach einem der Ansprüche 1 bis 10, **dadurch gekennzeichnet, dass** der Schieber (9) auf dem Körper (5) der Säge mittels eines Gleitschuhs (17) gehalten ist, der am Ende einer Befestigungsstange (18) montiert ist, die am Körper (5) befestigt ist und einen in dem Schieber ausgesparten Längsschlitz (10) durchquert, wobei dieser Gleitschuh (17) über die Kanten des Schlitzes übergreift und so ausgebildet ist, dass eine Führung der Kettenführung (4) ohne nennenswertes Spiel während des Verschiebens der Letzteren sichergestellt ist.

12. Kettensäge nach Anspruch 11, deren Kettenführung (4) in ihrem rückwärtigen Teil (4c) mit einem Längsschlitz (13) versehen ist, **dadurch gekennzeichnet, dass** der Abschnitt (13a) des Schlitzes (13) der Kettenführung (4), der auf dem Schuh (17) gleiten soll, eine Breite (L) aufweist, die ein Gleiten der Kettenführung (4) an den parallelen Seiten des Schuhs (17) ohne nennenswertes Spiel ermöglicht.

13. Kettensäge nach Anspruch 12, **dadurch gekennzeichnet, dass** der Schlitzabschnitt (13a) eine Breite (L) aufweist, die gleich oder größer als 9 mm ist.

14. Kettensäge nach Anspruch 11, **dadurch gekennzeichnet, dass** der Gleitschuh (17) ebenfalls ein Führungsorgan des Schiebers während dessen Verschiebungen bildet.

15. Kettensäge nach einem der Ansprüche 1 bis 14, **dadurch gekennzeichnet, dass** der Körper (5) einen Auflagebereich (16) aufweist, gegen den die Kettenführung (4) geklemmt ist, und dieser Auflagebereich (16) mit einer Aussparung (15) versehen ist, in der sich der Schieber mittels einer seiner ebenen Flächen verschieben kann, und die gegenüberliegende Fläche (9e) des Schiebers (9) in Bezug auf den Auflage-und Klemmbereich (16) zurückweicht.

16. Kettensäge nach einem der Ansprüche 5 bis 15, **dadurch gekennzeichnet, dass** die versenkbare Sperrklinke (10) eine geneigte Position hat, die in Rückwärtsrichtung in Bezug auf den ebenen Mittelbereich (9c) des Schiebers (9) ansteigt, und dass sie gegen eine entgegengerichtete Wirkung der Feder (24) beim Rücklauf des Schiebers (9) in ihren Sitz (14) gedrückt wird und zurück in die Anschlagposition gedrückt wird, wenn die vordere Kante (9d) des Schiebers die Blockiernase (10b) der Sperrklinke (10) überquert.

17. Kettensäge nach einem der Ansprüche 1 bis 16, **dadurch gekennzeichnet, dass** der Haken bzw. jeder Anschlag- und Antriebshaken (21) aus einem nach vorne gekrümmten Greifer gebildet ist.
